# EUROPEAN PATENT SPECIFICATION

(11) **EP 0 498 991 B1**
(45) Date of publication and mention of the grant of the patent: **03.04.1996**
(21) Application number: 91310800.7
(22) Date of filing: 22.11.1991
(51) Int. Cl.: G05D 23/00

(54) **Apparatus for regulating the temperature of a liquid**
Gerät zur Temperaturregelung einer Flüssigkeit
Appareil pour le réglage de température d'un liquide

(30) Priority: 15.02.1991 JP 13186/91; 23.04.1991 JP 36978/91
(43) Date of publication of application: 19.08.1992
(73) Proprietor: TOA MEDICAL ELECTRONICS CO., LTD., Chuoku, Kobe (JP)
(72) Inventor: Kuroda, Toshiaki, Takasagoshi, Hyogoken (JP); Inoue, Hiroyuki, Hiraokacho, Kakogawashi, Hyogoken (JP)
(74) Representative: Price, Paul Anthony King

(56) References cited:
- WO-A-87/04887
- DE-A- 3 237 406
- US-A- 4 312 835

## Description

The present invention relates to apparatus for regulating liquid temperature (liquid thermostatic apparatus) used for keeping substantially constant the reaction condition of a sample by keeping substantially constant the liquid temperature of the sample (e.g. in a sample analyzing apparatus such as blood analyzing apparatus).

In a sample analyzing apparatus, in order to always keep constant the rate of reaction of the sample, the temperature of the liquid, such as reagent used in the reaction, is kept constant by an apparatus for regulating liquid temperature. Such apparatus for regulating liquid temperature comprises a main body having a cavity through which the liquid passes or in which it is stored, a heat source such as a heater mounted on the main body, a sensor for detecting temperature, and a temperature control circuit for operating the heat source so as to keep constant the temperature of the main body according to the signal from the sensor. The reagent liquid is in contact with the main body and heat is transmitted to it, so that its temperature may be kept constant.

The requirements for the main body of such apparatus for regulating liquid temperature are heat conductivity and chemical resistance. If the heat conductivity is poor, the liquid cannot be heated quickly. If the reagent contains acids and other chemicals, it is important that the main body is not attacked by such reagent or does not contaminate the reagent.

As the material of the main body, (a) stainless steel and (b) resin-coated aluminum have been used, among others.

Stainless steel has excellent chemical resistance, but not so good heat conductivity (about 1/10th that of aluminum).

On the other hand, aluminum has an excellent heat conductivity of 0.56 [cal/cm · sec · °C] at 20° C, but poor chemical resistance, and it must be coated with fluoroplastics or other resins with good chemical resistance where it contacts the liquid. To prevent pin-holes, however, the coating thickness must be increased. The resin has poor thermal conductivity and, when the coating becomes thick, an adiabatic effect is caused and the thermal conductivity becomes inferior between the main body and the liquid.

According to a first aspect of the present invention, there is provided apparatus having a main body for regulating the temperature of a liquid passing therethrough to give the liquid a temperature substantially corresponding to the temperature of the main body, wherein:
the main body is made of ceramic comprising silicon carbide; and
the apparatus further comprises a liquid inlet at one end of a passage through the main body, the liquid inlet opening towards the wall of the passage.

Because the body contains silicon carbide, it has good thermal efficiency and chemical resistance. The liquid inlet opens towards the passage wall in order to improve heat transfer between the body and the incoming liquid.

According to a second aspect of the present invention, there is provided apparatus having a main body for regulating the temperature of a liquid passing therethrough to give the liquid a temperature substantially corresponding to the temperature of the main body, wherein:
the main body is made of ceramic comprising silicon carbide; and
the apparatus further comprises a passage through the main body, a liquid inlet at one end of the passage, a liquid outlet at the other end of the passage and a liquid separating member movable along the passage with the flow of the liquid from the inlet to the outlet.

The liquid separating member isolates the newly entered liquid (the temperature unregulated liquid) from the old liquid (the temperature regulated liquid). When liquid enters via the inlet, the incoming liquid pushes the liquid separating member along the passage. The liquid separating member itself pushes liquid out of the passage through an outlet. Because of the liquid separating member, only temperature regulated liquid is forced out. In other words, the incoming liquid is not discharged from the outlet.

When no more liquid is entering the passage, the liquid separating member returns to adjacent to the inlet (e.g. under the influence of gravity or its own buoyancy). This forces the newly entered liquid to pass between the liquid separating member and the passage wall in a turbulent manner, thereby increasing or reducing the temperature of the newly entered liquid to the temperature of the main body.

The invention will now be described by way of non-limiting embodiments with reference to the accompanying drawings, in which:-
Fig. 1 is a perspective view showing an embodiment of an apparatus for regulating liquid temperature, in accordance with the invention;
Fig. 2 is a magnified sectional view of a liquid inlet and liquid outlet of Fig. 1;
Fig. 3 is an electric wiring diagram for the apparatus of Fig. 1;
Fig. 4 is a magnified sectional view of an alternative liquid inlet and outlet for the embodiment of Fig. 1;
Fig. 5 is a magnified sectional view of an alternative liquid inlet and outlet for the embodiment of Fig. 1;
Fig. 6 is an explanatory diagram showing the liquid flow around the liquid separating member of Fig. 5;
Fig. 7 is an explanatory diagram showing a different example of liquid separating member;
Fig. 8 is an explanatory diagram showing another example of liquid separating member;
Fig. 9 is an explanatory diagram showing yet another example of liquid separating member; and
Fig. 10 is a perspective view showing a further example of liquid separating member.

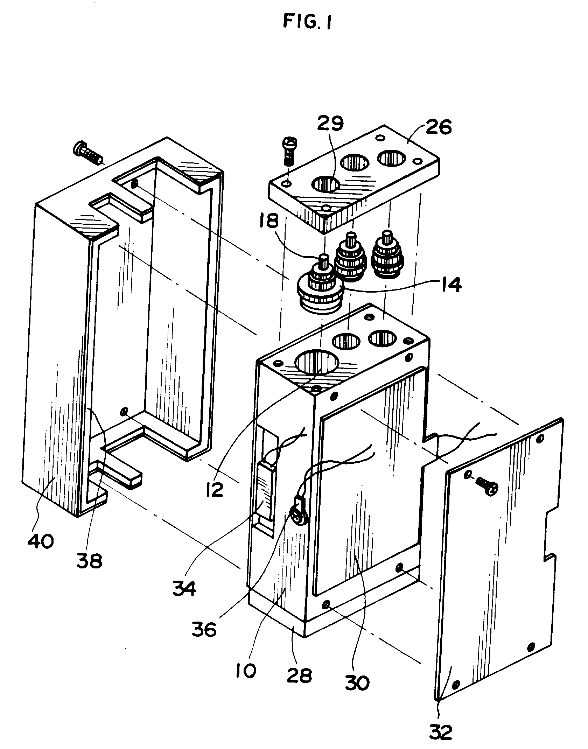

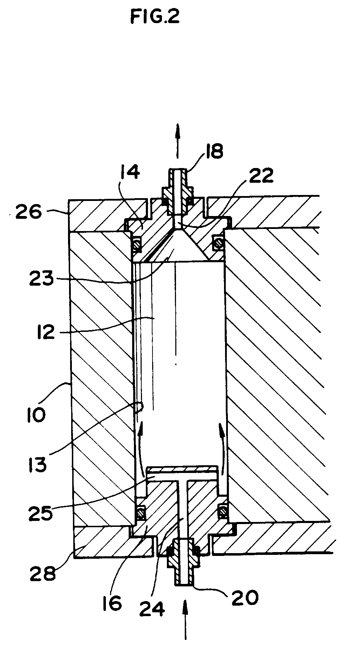

Fig. 1 is an exploded perspective view showing an embodiment of an apparatus for regulating liquid temperature in accordance with the invention, and Fig. 2 is a magnified sectional view of a liquid inlet and outlet of Fig. 1. The liquid is maintained at, for example, 40 ± 2°C.

Numeral 10 is a main body of the apparatus for regulating liquid temperature. It is composed of ceramics obtained by forming and sintering silicon carbide powder. The thermal conductivity is 1/2 to 1/3 that of aluminum. The main body 10 has a through passage 12. Numerals 14, 16 are plugs fitted in both openings of the passage 12. The plugs 14, 16 are provided with nipples 18, 20, respectively. Holes 22, 24 of the plugs 14, 16 communicate with the nipples 18, 20, respectively.

The nipple 20 is a liquid inlet, and the nipple 18 is a liquid outlet. Numerals 26, 28 are holders for fixing the plugs 14, 16 in the openings of the main body passage 12. The plugs 14, 16 are held between the holders 26, 28 and the main body 10. These holders 26, 28 are fitted to the main body 10 with screws. The nipple part of the plug 14 projects outside the holder 26 through a hole 29 in the holder 26.

Numeral 30 is a heat source for supplying heat to, or absorbing heat from, the main body 10 and therefore the liquid in the passage 12. In this embodiment, for example, a plate heater is used. The heater only supplies heat but, if required, instead of the heater, an element possessing the functions of both supplying and absorbing heat (for example, Peltier element) may be used. The heater or other heat source 30 is glued to both sides of the main body 10 by coating the surface with silicone compound or the like in order to enhance the heat conduction. The heater or other heat source 30 is installed in contact with the main body 10 as the holder 32 is fastened to the main body 10 with screws.

Numeral 34 is a thermistor (temperature detecting means) attached to the main body 10.

Numeral 36 is a thermostat, which acts as protective means for disconnecting the power supply line of the heater or other heat source 30 in case the main body temperature exceeds the allowable range. The main body 10 and parts mounted on the main body are covered with an insulator 38 so as not to be affected by the ambient temperature. The insulator 38 is glued to the inside of a cover 40, and the cover 40 is designed to wrap around the main body.

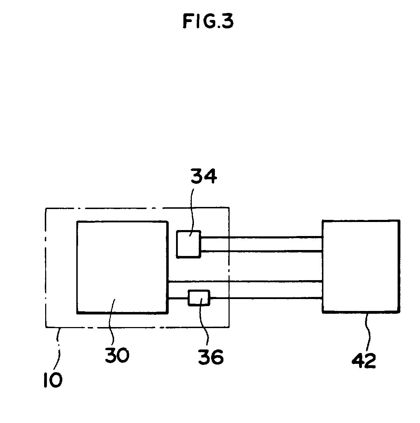

Fig. 3 is an electric wiring diagram for the apparatus of Fig. 1. The heater or other heat source 30 and the thermistor 34 are connected to a temperature control circuit 42. In the temperature control circuit 42, on the basis of the temperature information obtained from the thermistor 34, the operating state of the heater or other heat source 30 is controlled so that the temperature of the liquid leaving the apparatus is a desired temperature. In this embodiment, for example, the liquid temperature is controlled to 40 ± 2°C. A practical method of temperature control may be realized by utilizing the known art.

The incoming liquid is held in the passage 12 for a specific time, and is discharged after reaching the desired temperature. The liquid is, for example, the diluter for diluting a blood sample, or the hemolyzer for hemolyzing erythrocytes.

The liquid in the passage 12 reaches the desired temperature more quickly the closer it is to the passage wall 13. Accordingly, in order to raise the thermal efficiency, inside the main body, it is desired to increase the contact between the main body and the liquid. For example, the passage may be provided with undulations, studs, fins or the like. The incoming liquid is directed towards the passage wall.

Also, the passage may be filled with obstructions.

It is also important to prevent the liquid in the passage 12 from leaving before reaching the desired temperature. That is, the fresh liquid should push out the liquid that has reached the intended temperature. This is achieved by arranging the liquid feeding method properly, as described below.

Fig. 2 is a magnified sectional view of a liquid inlet and outlet. A hole 24 of the plug 16 is not a simple through hole, but is formed as approximately a T-hole 25, facing the side of the main body passage wall 13. A hole 22 of the outlet side plug 14 is approximately a conical hole 23 wider at its inlet end.

The liquid flowing in from the nipple 20 flows in the direction of the arrow. Thus, when entering the passage 12. by directing the liquid to the passage wall side, if the liquid has an incorrect temperature, it may be promptly regulated to a target temperature, while the liquid already reaching the target temperature is forced out by the incoming liquid. If the hole 24 of the plug 16 at the inlet side were to be a mere through hole, the incoming liquid would flow along the middle of the passage 12, and would leave the passage without having its temperature corrected.

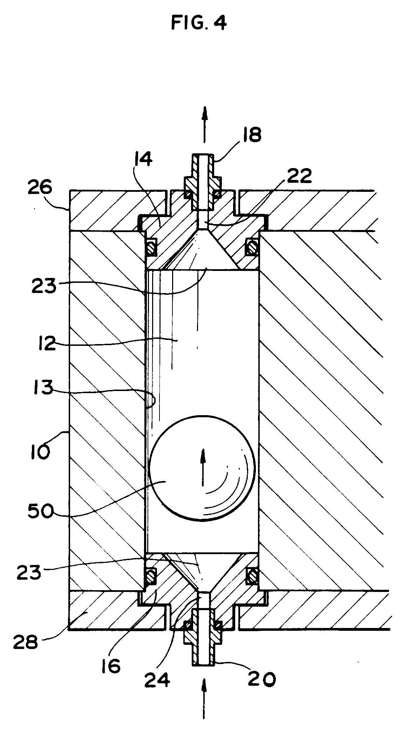

Referring now to Fig. 4, another embodiment of the invention is described below. Fig. 4 is a sectional view of a liquid passage 12. The passage 12 penetrates through the apparatus main body 10. The liquid inlet is disposed at one end of the passage 12, and the outlet at the other end. The liquid flows from bottom to top in Fig. 4. Both the hole 24 of the plug 16 at the inlet side and the hole 22 of the plug 14 at the outlet side are approximately conical holes 23 wider at their ends which face towards the passage 12.

Numeral 50 is a spherical liquid separating member. Its outside diameter is slightly smaller than the inside diameter of the passage 12, and its specific gravity is slightly greater than that of the liquid to be controlled in temperature (the liquid passing through the passage 12). Accordingly, the liquid separating member 50 initially rests on the plug 16 by its own weight, and when a force is applied it moves up the passage 12.

The gap between the liquid separating member 50 and the inner wall 13 of the passage 12 is small. As liquid flows in from the nipple 20, the incoming liquid raises the liquid separating member 50. The liquid in the passage 12 is pushed up by the liquid separating member 50, and flows out of the upper nipple 18 at the same rate as the incoming liquid. That is, as the liquid different from the target temperature flows in, the liquid separating member 50 isolates this liquid, and only liquid already at the target temperature in the passage 12 is forced out, so that the discharged liquid is at the target temperature.

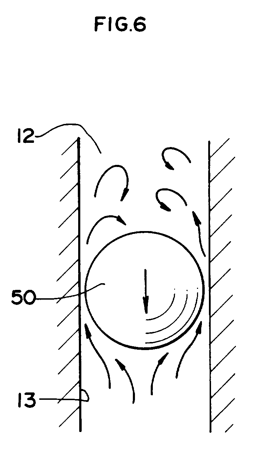

When the inflow of the liquid stops, the liquid separating member 50 slowly descends by gravity, and returns to the initial position. Fig. 6 shows this. As it descends, the liquid below the liquid separating member 50 gradually moves to the upper side of the liquid separating member 50.

The liquid runs through the gap between the liquid separating member 50 and the inner wall 13, and the heat is transmitted efficiently from the inner wall 13. The liquid running through the gap has a turbulent flow in the upper part inside the passage 12, and is mixed and stirred, so that the heat is transmitted more efficiently from the inner wall 13.

The specific gravity of the liquid separating member 50 should be preferably close to the specific gravity of the liquid to be used. If the difference in specific gravity is too much, the member 50 will not rise and fall and the liquid separation effect and liquid mixing and stirring effect are sacrificed. As the spherical member 50 presented in this embodiment, a hollow sphere is preferable. It should have good chemical resistance. For example, a hollow sphere of silicon carbide is disclosed in Japanese Patent Publication Sho. 56-21749. A resin resistant to chemicals may be also used.

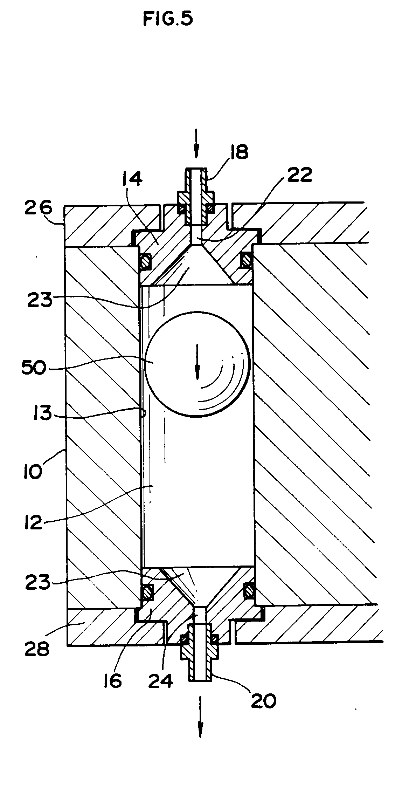

In this example, the liquid inlet is at the bottom and the outlet at the top. Alternatively, as shown in Fig. 5, the inlet may be at the top and the outlet at the bottom. In such a case, the specific gravity of the liquid separating member 50 is slightly less than that of the liquid. In Fig. 5, the upper nipple 18 is the liquid inlet, and the lower nipple 20 is the liquid outlet.

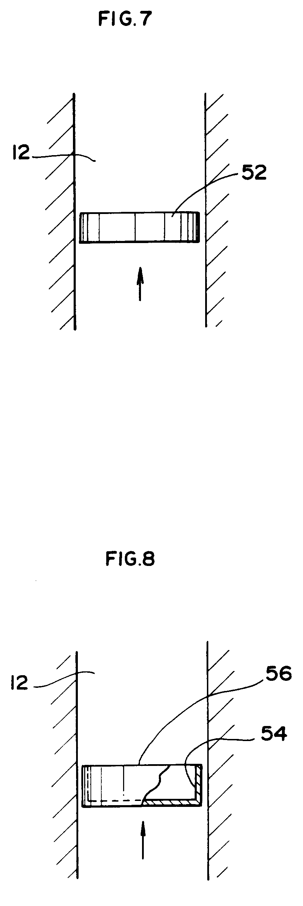

Various modifications may be also considered for the shape of the liquid separating member. Fig. 7 shows a disk-shaped liquid separating member 52 with a large thickness. If the thickness is too small, the disk-shaped member 52 rotates when the liquid flows in and does not ensure liquid separation.

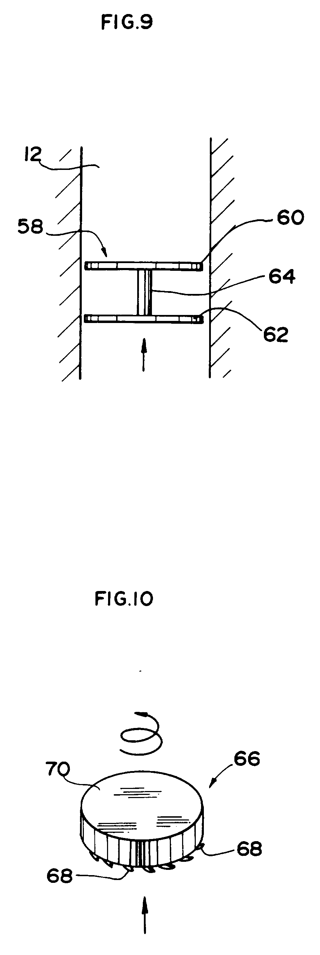

Fig. 8 shows a disk-shaped liquid separating member 56 having a concave part 54 on one side. The reason for forming the concave part 54 is to reduce the overall weight in spite of the large specific gravity of the material, thereby making it easier to move in the passage 12. In Fig. 8, the concave part 54 is disposed in the top surface, but it may be also formed in the bottom surface.

Fig. 9 shows a liquid separating member 58 composed of plural thin disks 60, 62, and a slender columnar coupling member 64 for coupling these disks. The liquid passes around the lower first disk 62, and then the upper second disk 60; that is, it is mixed and stirred twice, and the heat conduction effect is improved. In Fig. 9, two disks are used, but three or more disks may also be used.

Fig. 10 shows a disk-shaped liquid separating member 66 having plural blades 68 disposed around the liquid inflow side of the disk. When the liquid flows in from below, the liquid separating member 66 rises and rotates (as indicated by the arrow) because of the blades 68. It similarly rotates when descending. When the liquid passes through the gap between the wall and the disk-shaped member 66, it receives a torque. Because the top surface 70 of the member 66 also rotates, the liquid continues to receive a torque after passing through the gap and is further mixed and stirred. Thus, the heat conduction effect is enhanced.

The above embodiments bring about the following effects.
(1) Since the main body is made of ceramic mainly composed of silicon carbide, the apparatus has superior thermal efficiency and excellent chemical resistance. Also, because of the ceramic structure, the manufacturing precision and surface finishing precision may be improved.
(2) When the liquid inlet faces towards the passage inner wall, the liquid flowing into the passage for heating is directed towards the passage wall, and therefore the liquid is quickly regulated to a desired temperature, while the liquid already at the desired temperature is pushed out by the incoming liquid.
(3) When a liquid separating member is installed in the passage, the incoming liquid and the liquid already in the passage are separated, and only the liquid already at the desired temperature is discharged. Thus, the liquid is precisely handled. Afterwards, as the liquid separating member returns to its initial position, liquid is forced to pass between the member and the inner wall of the passage, while producing turbulence in the passage to mix and stir the liquid, so that the heat conduction efficiency is improved and the liquid quickly achieves the desired temperature within the passage.

Having described preferred embodiments of the invention with reference to the accompanying drawings, it is to be understood that the invention is not limited to those precise embodiments, and that various changes and modifications may be effected therein by one skilled in the art without departing from the scope of the invention.

## Claims

1. Apparatus having a main body (10) for regulating the temperature of a liquid passing therethrough to give the liquid a temperature substantially corresponding to the temperature of the main body (10), wherein:
the main body (10) is made of ceramic comprising silicon carbide; and
the apparatus further comprises a liquid inlet (25) at one end of a passage (12) through the main body (10), the liquid inlet (25) opening towards the wall (13) of the passage (12).

2. Apparatus according to claim 1, further comprising a liquid outlet (23) disposed at the other end of the passage (12) and shaped to taper as it leads away from the passage (12).

3. Apparatus having a main body (10) for regulating the temperature of a liquid passing therethrough to give the liquid a temperature substantially corresponding to the temperature of the main body (10), wherein:
the main body (10) is made of ceramic comprising silicon carbide; and
the apparatus further comprises a passage (12) through the main body (10), a liquid inlet (23) at one end of the passage, a liquid outlet (23) at the other end of the passage and a liquid separating member (50) movable along the passage (12) with the flow of the liquid from the inlet (23) to the outlet (23).

4. Apparatus according to claim 3, wherein the liquid inlet (23) is in use disposed below the liquid outlet (23) and the specific gravity of the liquid separating member (50) is greater than that of the liquid.

5. Apparatus according to claim 3, wherein the liquid inlet (23) is in use disposed above the liquid outlet (23) and the specific gravity of the liquid separating member (50) is less than that of the liquid.

6. Apparatus according to any one of claims 3 to 5, wherein the liquid separating member (50) is spherical.

7. Apparatus according to any one of claims 3 to 5, wherein the liquid separating member (52) is disk-shaped.

8. Apparatus according to any one of claims 3 to 5, wherein the liquid separating member (56) is disk-shaped and has a concave upstream or downstream surface (54).

9. Apparatus according to any one of claims 3 to 5, wherein the liquid separating member (58) comprises a plurality of disks (60, 62) spaced apart by a coupling member.

10. Apparatus according to any one of claims 3 to 5, wherein the liquid separating member (66) is disk-shaped and has a plurality of blades (68) for interacting with the flow of liquid past the member (66) to cause the member (66) to rotate as it moves along the passage (12).

11. Apparatus according to any one of claims 1 to 10, wherein the main body (10) comprises mainly silicon carbide.

12. Apparatus according to any one of claims 1 to 10, wherein the main body (10) comprises substantially only silicon carbide.

## Patentansprüche

1. Vorrichtung mit einem Hauptkörper (10) zur Regelung der Temperatur einer Flüssigkeit, die durch ihn hindurchgeht, um der Flüssigkeit eine Temperatur im wesentlichen entsprechend der Temperatur des Hauptkörpers (10) zu geben, worin
der Hauptkörper (10) aus Siliciumcarbid umfassender Keramik besteht und
die Vorrichtung weiterhin einen Flüssigkeitseinlaß (25) an einem Ende eines Durchgangs (12) durch den Hauptkörper (10) umfaßt, wobei der Flüssigkeitseinlaß (25) zu der Wand (13) des Durchgangs (12) hin mündet.

2. Vorrichtung nach Anspruch 1, weiterhin mit einem Flüssigkeitsauslaß (23), der am anderen Ende des Durchgangs (12) angeordnet ist und so geformt ist, daß er sich verjüngt, während er von dem Durchgang (12) wegführt.

3. Vorrichtung mit einem Hauptkörper (10) zur Regelung der Temperatur einer Flüssigkeit, die durch ihn hindurchgeht, um der Flüssigkeit eine Temperatur im wesentlichen entsprechend der Temperatur des Hauptkörpers (10) zu geben, worin
der Hauptkörper (10) aus Siliciumcarbid umfassender Keramik besteht und
die Vorrichtung weiterhin einen Durchgang (12) durch den Hauptkörper (10), einen Flüssigkeitseinlaß (23) am einen Ende des Durchgangs, einen Flüssigkeitsauslaß (23) am anderen Ende des Durchgangs und eine Flüssigkeitstrenneinrichtung (50), die entlang dem Durchgang (12) mit dem Strom der Flüssigkeit von dem Einlaß (23) zu dem Auslaß (23) bewegbar ist, umfaßt.

4. Vorrichtung nach Anspruch 3, worin der Flüssigkeitseinlaß (23) bei der Verwendung unter dem Flüssigkeitsauslaß (23) angeordnet ist und das spezifische Gewicht der Flüssigkeitstrenneinrichtung (50) größer als jenes der Flüssigkeit ist.

5. Vorrichtung nach Anspruch 3, worin der Flüssigkeitseinlaß (23) bei der Verwendung oberhalb des Flüssigkeitsauslasses (23) angeordnet ist und das spezifische Gewicht der Flüssigkeitstrenneinrichtung (50) geringer als jenes der Flüssigkeit ist.

6. Vorrichtung nach einem der Ansprüche 3 bis 5, worin die Flüssigkeitstrenneinrichtung (50) kugelförmig ist.

7. Vorrichtung nach einem der Ansprüche 3 bis 5, worin die Flüssigkeitstrenneinrichtung (52) scheibenförmig ist.

8. Vorrichtung nach einem der Ansprüche 3 bis 5, worin die Flüssigkeitstrenneinrichtung (56) scheibenförmig ist und eine konkave Aufstrom- oder Abstromoberfläche (54) hat.

9. Vorrichtung nach einem der Ansprüche 3 bis 5, worin die Flüssigkeitstrenneinrichtung (58) mehrere Scheiben (60, 62) umfaßt, die durch ein Verbindungsteil voneinander beabstandet sind.

10. Vorrichtung nach einem der Ansprüche 3 bis 5, worin die Flüssigkeitstrenneinrichtung (66) scheibenförmig ist und mehrere Blätter (68) für eine Wechselwirkung mit dem Flüssigkeitsstrom vorbei an der Einrichtung (66) hat, um zu bewirken, daß die Einrichtung (66) rotiert, während sie sich entlang dem Durchgang (12) bewegt.

11. Vorrichtung nach einem der Ansprüche 1 bis 10, worin der Hauptkörper (10) hauptsächlich Siliciumcarbid umfaßt.

12. Vorrichtung nach einem der Ansprüche 1 bis 10, worin der Hauptkörper (10) im wesentlichen nur Siliciumcarbid umfaßt.

## Revendications

1. Appareil comportant un corps principal (10) destiné à réguler la température d'un liquide qui le traverse pour donner au liquide une température correspondant sensiblement à la température du corps principal (10) où:
le corps principal (10) est fait d'une céramique comprenant du carbure de silicium; et
l'appareil comprend en outre une entrée de liquide (25) à une extrémité d'un passage (12) dans le corps principal (10), l'entrée de liquide (25) s'ouvrant vers la paroi (13) du passage (12).

2. Appareil selon la revendication 1, comprenant en outre une sortie de liquide (23) placée à l'autre extrémité du passage (12) et à laquelle il est donné une forme conique qui s'amincit en s'éloignant du passage (12).

3. Appareil comportant un corps (10) destiné à réguler la température d'un liquide qui le traverse pour donner au liquide une température correspondant sensiblement à la température du corps principal (10), où:
le corps principal (10) est fait de céramique comprenant du carbure de silicium; et
l'appareil comprend un passage (12) dans le corps principal (10), une entrée de liquide (23) à une extrémité du passage, une sortie de liquide (23) à l'autre extrémité du passage et un élément de séparation de liquide (50) mobile dans le passage (12) avec l'écoulement de liquide de l'entrée (23) vers la sortie (23).

4. Appareil selon la revendication 3, où l'entrée de liquide (23) est, lors de l'utilisation, placée au-dessous de la sortie de liquide (23) et la densité de l'élément de séparation de liquide (50) est supérieure à celle du liquide.

5. Appareil selon la revendication 3, où l'entrée de liquide (23) est, lors de l'utilisation, placée au-dessus de la sortie de liquide (23) et la densité de l'élément de séparation de liquide (50) est inférieure à celle du liquide.

6. Appareil selon l'une quelconque des revendications 3 à 5, où l'élément de séparation de liquide (50) est sphérique.

7. Appareil selon l'une quelconque des revendications 3 à 5, où l'élément de séparation de liquide (52) a la forme d'un disque.

8. Appareil selon l'une quelconque des revendications 3 à 5, où l'élément de séparation de liquide (56) a la forme d'un disque et a une surface (54) concave dirigée vers l'amont ou vers l'aval.

9. Appareil selon l'une quelconque des revendications 3 à 5, où l'élément de séparation de liquide (58) comprend une pluralité de disques (60, 62) espacés les uns des autres par un élément de raccordement.

10. Appareil selon l'une quelconque des revendications 3 à 5, où l'élément de séparation de liquide (66) a la forme d'un disque et comporte une pluralité de lames (68) destinées à réagir à l'écoulement de liquide passant au-delà de l'élément (66) pour faire tourner l'élément (66) lorsqu'il se déplace dans le passage (12).

11. Appareil selon l'une quelconque des revendications 1 à 10, où le corps principal (10) comprend principalement du carbure de silicium.

12. Appareil selon l'une quelconque des revendications 1 à 10, où le corps principal (10) ne comprend sensiblement que du carbure de silicium.
